# EUROPEAN PATENT SPECIFICATION

(11) **EP 2 021 212 B1**
(45) Date of publication and mention of the grant of the patent: **18.11.2009**
(21) Application number: 07866276.4
(22) Date of filing: 25.05.2007
(51) Int. Cl.: B60R 21/264

(54) **A GAS GENERATOR FOR AN AUTOMOBILE SAFETY DEVICE, AND A DEVICE FITTED THEREWITH**
GASGENERATOR FÜR EINE KRAFTFAHRZEUG-SICHERHEITSVORRICHTUNG UND DAMIT AUSGESTATTETE VORRICHTUNG
GÉNÉRATEUR DE GAZ POUR UN DISPOSITIF DE SÉCURITÉ AUTOMOBILE ET DISPOSITIF FIXÉ À CELUI-CI

(30) Priority: 29.05.2006 FR 0604771
(43) Date of publication of application: 11.02.2009
(73) Proprietor: Autoliv Development AB, 447 83 Vargarda (SE)
(72) Inventor: ABAZIOU, Xavier, 29800 Landerneau (FR)
(74) Representative: Branger, Jean-Yves
(86) International application number: PCT/EP2007/055102
(87) International publication number: WO 2008/058772

(56) References cited:
- DE-U1- 29 920 713
- US-A- 5 700 030

## Description

The present invention relates to a gas generator fitted with pressure-regulator means, and to a safety device provided with the generator.

Pyrotechnic gas generators for automobile safety use pyrotechnic charges constituted by propellant, in which burn rate depends on operating pressure.

Thus, below a certain pressure, the propellant extinguishes, and above its nominal pressure range, its combustion performance changes rapidly.

The temperature range in which a gas generator needs to be capable of operating extends typically from -35°C to +85°C. The burn rate of the propellant is proportional to temperature, which means that under unvarying control, the pressure in the combustion chamber of the pyrotechnic charge is greater at high temperature, thus leading to differences in performance depending on temperature.

In order to keep performance constant over the above-specified temperature range, proposals have already been made to regulate pressure in the combustion chamber.

Thus, patent document US-A-5 700 030, with the features of the preamble of claim 1, describes a gas generator for a motor vehicle safety device, the generator comprising a first combustion chamber for combustion purposes containing a pyrotechnic initiator and a pyrotechnic charge in which combustion is triggered by said initiator, and a second chamber for diffusion purposes into which the gas that results from the combustion of said charge is transferred prior to being evacuated to the outside.

The two chambers are separated by each other by a partition that presents a communication orifice that is closed by a capsule.

The diffusion chamber is provided with a piston suitable for closing or not closing said orifice as a function of the gas pressure in the chamber. The piston is continuously urged towards its orifice-closing position by a Belleville spring washer. In practice, as soon as the gas pressure in the combustion chamber is great enough, it pushes back the piston, compressing the spring.

This makes it possible to provide better control over the combustion of the propellant.

Patent document JP-A-08/156737 describes a gas generator for an airbag in which means are also provided for regulating pressure in the combustion chamber. Said means are formed by a stationary case having a perforated cylindrical wall, and a piston likewise constituted by a cylinder and suitable for sliding in the case. Depending on the position of the piston, more or fewer holes through the wall are uncovered, putting the combustion, chamber into communication with the diffusion chamber.

In certain embodiments, the piston is mounted on a spring. In another variant, a mass of elastically deformable material allows the piston to slide reversibly.

In patent document US-A-6 062 598, a hybrid generator having a supply of gas is described that includes a valve placed transversely between the combustion and diffusion chambers. The function of the valve is to close off partially a channel that interconnects the two chambers.

The valve comprises a piston that is secured to a metal spring type element that is temperature-sensitive.

Depending on the position of the piston, the effective section of the channel varies as a function of temperature in order to compensate for temperature-related pressure differences in the supply of gas.

Nevertheless, it is clearly stated that the channel between the two chambers is never closed off completely. It is also stated that the position of the valve is stationary while the generator is in operation. Movement of the valve is generated solely by the temperature-sensitive metal element.

The systems described in the first two documents include means that operate independently of temperature.

The system described in the third document operates strictly as a function of temperature and takes no account of the pressure in the combustion chamber.

Patent document FR-A-2 876 968 discloses a generator that enables those problems to be solved.

According to that invention, the generator comprises a combustion first chamber and a diffusion second chamber into which the gas that results from the combustion is transferred prior to being evacuated to the outside.

The chambers are separated from each other by a partition referred to as a "nozzle" that presents a communication orifice, the diffusion chamber is provided with a piston suitable for closing or not closing said orifice as a function of the gas pressure in the combustion chamber, said piston being urged towards its orifice-closing position by a mass of elastically deformable material. The mass presents stiffness that is variable, and that decreases with increasing temperature.

The present invention seeks to solve the same problems as those described above, while using a device that is simpler and self-regulating.

Thus, in a first aspect, the present invention provides a gas generator for a motor vehicle safety device, the gas generator comprising an enclosure containing at least:
a combustion chamber containing a pyrotechnic charge in which combustion is triggered by an initiator associated with the chamber;
a plenum chamber for receiving the gas generated by combustion of the charge and for evacuating the gas to the outside;
the gas generator being characterized in that it includes:
   a transfer chamber distinct from the combustion chamber, into which the combustion gas is directed for storage prior to being evacuated to the outside via the plenum chamber, a duct connecting the combustion chamber to the transfer chamber; and
      in that the duct comprises a stationary segment and a movable segment that is movable relative to the stationary segment, these segments being suitable for occupying a first extreme position in which said duct completely isolates said plenum chamber from the combustion and transfer chambers, and a second extreme position in which said duct, by a movement of the movable segment, opens a passage for gas from said transfer chamber to said plenum chamber, the transition from one position to the other taking place once a reference pressure is reached in the transfer chamber.

From the above, it can be understood that so long as the reference value is not reached in the transfer chamber, gas is not evacuated to the outside, with such evacuation taking place only after the passage has opened, which does not occur until said reference value has been reached.

Once some evacuation has taken place and the pressure has dropped back below the reference value, the moving segment moves in the opposite direction to close the duct, and so on.

According to other characteristics of the generator that are advantageous but not limiting:
• said plenum chamber is interposed between the combustion and transfer chambers;
• said duct extends through the plenum chamber;
• the opposite ends of said duct are mounted in two partitions for separating the three chambers;
• said movable segment is mounted inside the stationary segment;
• the area of the right section of said movable segment at its end beside the transfer chamber is greater than the area of the right section of said movable segment at its opposite end situated beside the combustion chamber;
• said stationary segment is secured to the partition separating the combustion and plenum chambers, and is preferably integral therewith;
• at least a terminal portion of said movable segment presents a shape that is generally frustoconical, said portion in said first extreme position being pressed against a complementary opening formed in the partition separating the plenum and transfer chambers, while being slightly spaced apart from said opening in the second extreme position, the space between them thus constituting said passage for the gas;
• both of said segments are pierced by at least one respective opening causing the space inside them to communicate with the plenum chamber, said openings being situated respectively in register with solid portions of the other segment in said first extreme position, and being superposed at least in part in said second extreme position in order to constitute said passage for the gas;
• said combustion chamber is closed by a capsule that gives way above a pressure value in the combustion chamber, thus enabling the gas to flow into the transfer chamber via said duct; and
• said transfer chamber contains at least one additional pyrotechnic charge.

Finally, the present invention also provides a motor vehicle safety device such as an airbag trigger or a safety belt retractor that is fitted with a generator having any of the above characteristics.

Other characteristics and advantages of the present invention appear on reading the following description of certain preferred embodiments.

The description is made with reference to the accompanying drawings, in which:
• Figure 1 is a section view on a longitudinal midplane of a generator in accordance with the invention, the duct therein occupying said first extreme position;
• Figure 2 is a view analogous to Figure 1, said duct occupying the second extreme position serving to open a passage for the gas;
• Figures 3 and 4 are fragmentary views of another embodiment of the duct, respectively in its first and second extreme positions; and
• Figure 5 plots curves for pressure inside the combustion and transfer chambers as a function of time.

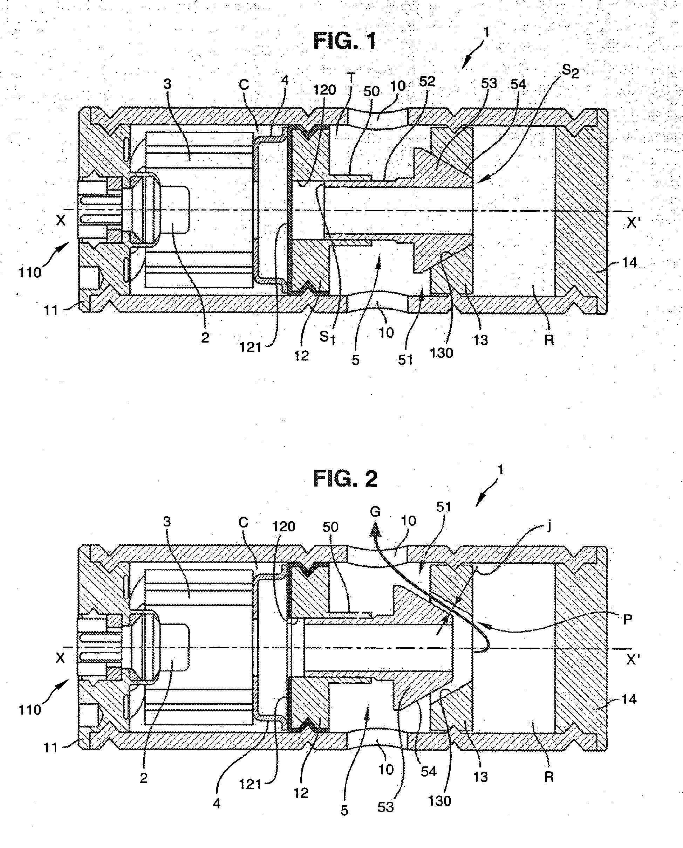

The gas generator shown in part in accompanying Figures 1 and 2 essentially comprises a combustion chamber C, a plenum chamber T, and a transfer chamber R, disposed axially one after another. The plenum chamber lies between the combustion and transfer chambers.

The generator is constituted by an enclosure formed by a hollow metal cylindrical body of axis XX' that presents gas exhaust orifices 10 that are radially directed and situated in the wall of the central plenum chamber T.

The opposite ends of said enclosure are closed by crimped-on closure walls 11 and 14.

Two thick transverse partitions 12 and 13, also referred to as "nozzles", subdivide the enclosure into the three chambers specified above.

More precisely, the partition 12 separates the combustion chamber C from the plenum chamber T, while the partition 13 separates the plenum chamber T from the transfer chamber R.

An initiator 2 is mounted in an opening 110 centered on the axis XX' presented in the wall 11. It is secured and held therein with the help of appropriate means.

A pyrotechnic charge 3, e.g. constituted by propellant, surrounds the initiator. It is annular in shape and its axis of symmetry coincides with the axis XX'. In an embodiment that is not shown, the charge may be made up of pellets.

The block is held in place by a grid 4 which also bears against the partition 12.

The partition presents an orifice 120 centered on the axis XX' and putting the two chambers C and T into communication with each other. The partition is closed by a capsule 121, e.g. constituted by a fine metal film and disposed beside the combustion chamber.

In the embodiment shown, the partition 12 is made integrally with the stationary segment 50 of a duct 5 that performs a function that is explained further on below. Specifically, the inside diameter of the stationary segment 50 is the same as the diameter of the orifice 120. Naturally, in a different embodiment, said segment could be constituted by a part fitted onto the partition 12 and secured thereto.

The partition 13 also has an orifice, referenced 130, that is likewise centered on the above-specified axis XX'. This orifice is tapering in shape, its smaller opening being situated beside the transfer chamber R.

The duct 5 mentioned above also comprises a movable segment 51 that is mounted to slide relative to the stationary segment 50.

The movable segment 51 is constituted by a cylindrical body 52 that extends inside the stationary segment 50. For this purpose, its outside diameter is equal to the inside diameter of said stationary segment, ignoring clearances.

The body 52 is extended by a head 53 having a tapering surface 54 that is complementary in shape to the shape of the opening 130 in the partition 13.

Thus, in the position of Figure 1, the head 53 presses fully against the opening 130 of the partition 13 so that the two segments 50 and 51 constitute a closed duct 5 that puts the orifice 120 in the partition 12 into communication with the transfer chamber R.

The surface area S₂ of the right section of the movable segment 51 at its end situated beside the transfer chamber R is greater than the surface area, referenced S₁, of the right section of said movable section at its opposite end situated beside the combustion chamber C.

The advantage of such a characteristic is explained further on below.

There follows an explanation of how such a generator operates, providing a context for understanding the advantage of the above-mentioned characteristics.

Before the generator 1 is triggered, the elements constituting it occupy the position shown in Figure 1, which means that the movable segment 51 of the duct 5 is pressed against the opening 130 of the partition 13 such that said duct completely isolates the plenum chamber T from the other two chambers C and R. Furthermore, the capsule 121 isolates the chamber C from the duct 5.

In operation, a firing current is transmitted to the initiator 2 via suitable pints. This ignition then initiates the charge contained in the cap of the initiator. Because of an increase of pressure therein, the cap opens and/or fragments, thereby allowing gas and flame to escape to the outside, i.e. into the chamber C.

The flame and gas causes the pyrotechnic charge 3 to ignite in turn. The gas that results from this combustion causes the pressure inside the combustion chamber C to rise progressively. Above a certain pressure level, e.g. about 20 megapascals (MPa), the capsule 121 breaks and the gas under pressure then flows into the duct 5 and penetrates into the transfer chamber R.

Pressure then appears inside said chamber and increases significantly.

Under such conditions, the pressure between the two chambers C and R ought normally to tend towards equilibrium. However, insofar as the area S₂ of the right section of the moving segment 51 of the duct 5 beside the transfer chamber R is greater than the area S₁ of the right section of said movable segment beside the implant chamber, a force is exerted on said segment 51 directed towards the combustion chamber C, causing the head 53 of said segment to move away a little from the opening 130 in the partition 13. This produces clearance j constituting a passage P into which the gas flows, as presented by arrow G in Figure 2.

The transfer chamber R empties more quickly than the combustion chamber C so the pressure in the combustion chamber becomes greater than the pressure in the transfer chamber. Consequently, the force applied on the movable segment 51 reverses, thereby causing it to move and tending to press the head 53 against the opening 130 in the partition 13, thus reducing the size of the passage P through which the gas escapes.

The pressure in the transfer chamber R then rises again and a new cycle of displacing the segment 51 begins. During combustion of the propellant, the segment 51 thus starts to oscillate back and forth and tends finally towards an equilibrium position.

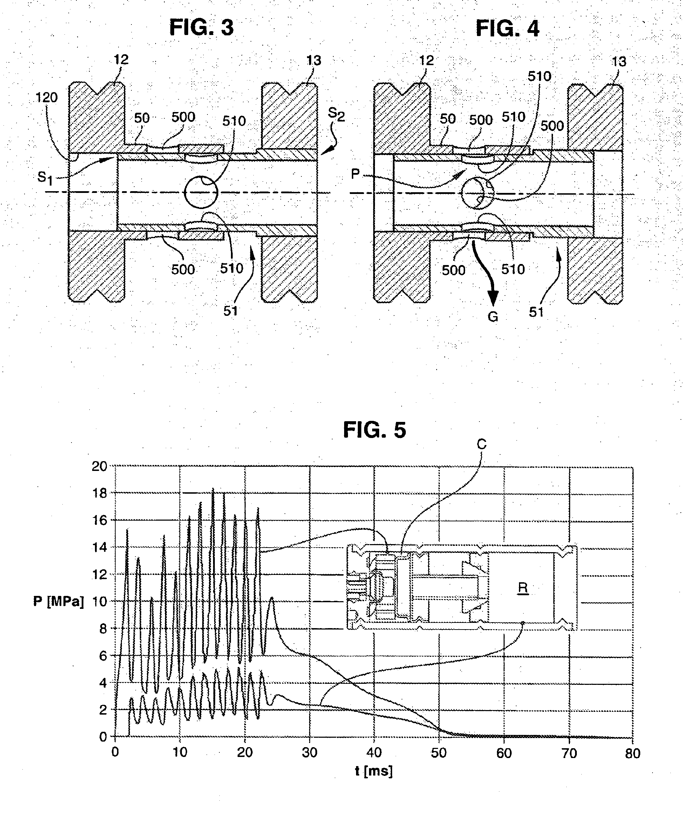

Instead of having segments 50 and 51 as shown in Figures 1 and 2, it is also possible to use segments of the kind shown in Figures 3 and 4. The segments 50 and 51 are in the form of two cylinder portions suitable for engaging one in the other.

Specifically, the moving segment 51 is engaged in the stationary segment 50 which is integral with the partition 12. Each segment is pierced by respective circular openings 500 and 510. In the inactive position of Figure 3, the openings in the stationary segment are in register with solid portions of the movable segment, and vice versa. In contrast, when the gas present in the transfer chamber R acts on the segment 51 in order to cause it to slide, then the openings 500 and 510 overlap in part, giving the gas the option of escaping into the plenum chamber through the passage P that is constituted in this way.

This system presents fewer oscillations than the "tapering piston" solution described above, and it tends more quickly towards an equilibrium position.

These phenomena are shown up by the curves in Figure 5. Thus, the top curve shows pressure as a function of time in the combustion chamber C, while the bottom curve shows pressure as a function of time in the chamber R.

It can be seen that a peak in the top curve corresponds to a trough in the bottom curve, and vice versa.

It should be observed that it is possible to place a second charge of propellant in the transfer chamber R, which propellant may be of the same kind as that in the combustion chamber C.

The advantage of spreading the propellant over two locations instead of only one is to make it easier to ignite the first charge (which means smaller dead volume) while having ignition that is somewhat retarded and gentler for the second charge. This makes it possible to have a gas flow rate leaving the generator that is a little lower at the beginning of operation.

Use can also be made of two propellant charges that present different operating times, the system thus enabling pressure to be made stable thus achieving stable yield even if the flow rates leaving the chamber vary over time.

Another option made possible by this organization is to be able to use high yield propellants (which in general ignite and burn very poorly on their own and are very sensitive to temperature variations) in the chamber R, while using a propellant in the chamber C that has the function of generating hot gas for maintaining temperature and pressure conditions that are good for optimum combustion of the propellant present in the chamber R.

It is also possible to couple the system with a supply of gas under pressure such that while the supply is emptying a gentler gas flow rate is obtained at the beginning of operation.

Finally, the advantages associated with the present generator are recalled below:
• an increase in the reproducibility of gas generator performance over the temperature range;
• the pressures in the combustion chamber vary less (the maximum pressure is reduced, thus making it possible to lighten its structure while conserving the same safety coefficients);
• during a barbecue test, the propellant burns at relatively low pressure, thus avoiding damage to the structure of the generator (detection or fragmentation); and
• it becomes possible to use propellant that is highly sensitive to temperature or to pressure variations.

## Claims

1. A gas generator for a motor vehicle safety device, the gas generator comprising an enclosure (1) containing at least:
• a combustion chamber (C) containing a pyrotechnic charge (3) in which combustion is triggered by an initiator (2) associated with the chamber;
• a plenum chamber (T) for receiving the gas generated by combustion of the charge (3) and for evacuating the gas to the outside;
the gas generator being **characterized in that** it includes:
• a transfer chamber (R) distinct from the combustion chamber (C), into which the combustion gas is directed for storage prior to being evacuated to the outside via the plenum chamber (T), a duct (5) connecting the combustion chamber (C) to the transfer chamber (R); and
**in that** the duct (5) comprises a stationary segment (50) and a movable segment (51) that is movable relative to the stationary segment, these segments (50, 51) being suitable for occupying a first extreme position in which said duct (5) completely isolates said plenum chamber (T) from the combustion and transfer chambers (C, R), and a second extreme position in which said duct (5), by a movement of the movable segment, opens a passage (P) for gas from said transfer chamber (R) to said plenum chamber (T), the transition from one position to the other taking place once a reference pressure is reached in the transfer chamber (R).

2. A generator according to claim 1, **characterized by** the fact that said plenum chamber (T) is interposed between the combustion and transfer chambers (C, R).

3. A generator according to claim 2, **characterized by** the fact that said duct (5) extends through the plenum chamber (T).

4. A generator according to claim 2 or claim 3, **characterized by** the fact that the opposite ends of said duct (5) are mounted in two partitions (12; 13) for separating the three chambers (C; T; R).

5. A generator according to any one of claims 1 to 4, **characterized by** the fact that said movable segment (51) is mounted inside the stationary segment (50).

6. A generator according to claim 5, **characterized by** the fact that the area of the right section (52) of said movable segment (51) at its end beside the transfer chamber (R) is greater than the area of the right section (S₁) of said movable segment at its opposite end situated beside the combustion chamber (C).

7. A generator according to any one of claims 4 to 6, **characterized by** the fact that said stationary segment (50) is secured to the partition (12) separating the combustion and plenum chambers (C and T), and is preferably integral therewith.

8. A generator according to any one of claims 4 to 7, **characterized by** the fact that at least a terminal portion (53) of said movable segment (51) presents a shape that is generally frustoconical, said portion in said first extreme position being pressed against a complementary opening (130) formed in the partition (13) separating the plenum and transfer chambers (T, R), while being slightly spaced apart from said opening (130) in the second extreme position, the space between them thus constituting said passage (P) for the gas.

9. A generator according to any one of claims 4 to 7, **characterized by** the fact that both of said segments (50, 51) are pierced by at least one respective opening (500, 510) causing the space inside them to communicate with the plenum chamber (T), said openings being situated respectively in register with solid portions of the other segment in said first extreme position, and being superposed at least in part in said second extreme position in order to constitute said passage (P) for the gas.

10. A generator according to any preceding claim, **characterized by** the fact that said combustion chamber (C) is closed by a capsule (121) that gives way above a pressure value in the combustion chamber (C), thus enabling the gas to flow into the transfer chamber (R) via said duct (5).

11. A generator according to any preceding claim, **characterized by** the fact that said transfer chamber (R) contains at least one additional pyrotechnic charge.

12. A motor vehicle safety device such as an airbag trigger or a safety belt retractor, the device being fitted with a generator according to any preceding claim.

## Patentansprüche

1. Gasgenerator für eine Motorfahrzeugsicherheitsvorrichtung, wobei der Gasgenerator ein Gehäuse (1) umfasst, das wenigstens enthält:
• eine Verbrennungskammer (C), die eine pyrotechnische Ladung (3) umfasst, in der eine Verbrennung durch einen der Kammer zugeordneten Zünder (2) ausgelöst wird;
• eine Luftkammer (T) zum Aufnehmen des Gases, das durch Verbrennung der Ladung (3) erzeugt wird, und zum Evakuieren des Gases nach außen;
wobei der Gasgenerator **dadurch gekennzeichnet ist, dass** er umfasst:
• eine Übertragungskammer (R), die von der Verbrennungskammer (C) verschieden ist, in die das Verbrennungsgas gerichtet wird zum Speichern, bevor es nach außen über die Luftkammer (T) evakuiert wird, ein Rohr (5), das die Verbrennungskammer (C) mit der Übertragungskammer (R) verbindet; und
dass das Rohr (5) ein stationäres Segment (50) und ein bewegliches Segment (51) umfasst, das relativ zum stationären Segment beweglich ist, wobei diese Segmente (50, 51) geeignet sind eine erste extreme Position einzunehmen, in der das Rohr (5) die Luftkammer (T) vollständig von der Verbrennungskammer (C) und der Übertragungskammer (R) isoliert, und eine zweite extreme Position, in der das Rohr (5) durch eine Bewegung des beweglichen Segments einen Durchgang (P) öffnet für Gas aus der Übertragungskammer (R) zur Luftkammer (T), wobei der Übergang von einer Position zur anderen stattfindet, sobald ein Referenzdruck in der Übertragungskammer (R) erreicht ist.

2. Generator gemäß Anspruch 1, **dadurch gekennzeichnet, dass** die Luftkammer (T) zwischen die Verbrennungskammer (C) und die Übertragungskammer (R) geschaltet ist.

3. Generator gemäß Anspruch 2, **dadurch gekennzeichnet, dass** das Rohr (5) sich durch die Luftkammer (T) erstreckt.

4. Generator gemäß Anspruch 2 oder Anspruch 3, **dadurch gekennzeichnet, dass** die gegenüberliegenden Enden des Rohrs (5) in zwei Trennwänden (12; 13) montiert sind zum Trennen der drei Kammern (C; T; R).

5. Generator gemäß einem der Ansprüche 1 bis 4, **dadurch gekennzeichnet, dass** das bewegliche Segment (51) in dem stationären Segment (50) montiert ist.

6. Generator gemäß Anspruch 5, **dadurch gekennzeichnet, dass** die Fläche des rechten Querschnitts (52) des beweglichen Segments (51) an seinem Ende neben der Übertragungskammer (R) größer ist als die Fläche des rechten Querschnitts (S₁) des beweglichen Segments an seinem gegenüberliegenden Ende, das neben der Verbrennungskammer (C) gelegen ist.

7. Generator gemäß einem der Ansprüche 4 bis 6, **dadurch gekennzeichnet, dass** das stationäre Segment (50) an der Trennwand (12) befestigt ist, die die Verbrennungskammer (C) und die Luftkammer (T) trennt, und vorzugsweise einstückig mit ihr ist.

8. Generator gemäß einem der Ansprüche 4 bis 7, **dadurch gekennzeichnet, dass** wenigstens ein Endabschnitt (53) des beweglichen Segments (51) eine Form aufweist, die im Wesentlichen kegelstumpfartig ist, wobei der Abschnitt in der ersten extremen Position gegen eine komplementäre Öffnung (130) gedrückt wird, die in der Trennwand (13) gebildet ist, die die Luftkammer (T) und die Übertragungskammer (R) trennt, während sie leicht von der Öffnung (130) in der zweiten extremen Position getrennt ist, wobei der Raum zwischen ihnen somit den Durchgang (P) für das Gas darstellt.

9. Generator gemäß einem der Ansprüche 4 bis 7, **dadurch gekennzeichnet, dass** beide Segmente (50, 51) von wenigstens einer jeweiligen Öffnung (500, 510) durchdrungen sind, die veranlassen, dass der Raum in ihnen mit der Luftkammer (T) in Verbindung steht, wobei die Öffnungen jeweils paßgenau mit festen Abschnitten des anderen Segments in der ersten extremen Position gelegen sind, und wenigstens teilweise in der zweiten extremen Situation überlagert werden, um den Durchgang (P) für das Gas darzustellen.

10. Generator gemäß einem der vorhergehenden Ansprüche, **dadurch gekennzeichnet, dass** die Verbrennungskammer (C) durch eine Kapsel (121) geschlossen ist, die oberhalb eines Druckwerts in der Verbrennungskammer (C) nachgibt, wodurch sie dem Gas ermöglicht, in die Übertragungskammer (R) über das Rohr (5) zu fließen.

11. Generator gemäß einem der vorhergehenden Ansprüche, **dadurch gekennzeichnet, dass** die Übertragungskammer (R) wenigstens eine zusätzlich pyrotechnische Ladung enthält.

12. Motorfahrzeugsicherheitsvorrichtung, wie beispielsweise ein Airbag-Auslöser oder eine Sicherheitsgurtaufrollautomatik, wobei die Vorrichtung mit einem Generator gemäß einem der vorhergehenden Ansprüche ausgestattet ist.

## Revendications

1. Générateur de gaz pour un dispositif de sécurité pour véhicule automobile, qui comprend une enveloppe (1) qui renferme au moins :
- une chambre de combustion **(C)** contenant une charge pyrotechnique (3), dont la combustion est déclenchée par un initiateur (2) associé à cette chambre ;
- une chambre de réception et de tranquillisation **(T)** des gaz générés par la combustion de la charge (3), qui assure leur évacuation vers l'extérieur,
**caractérisé en ce que** ce générateur de gaz comprend :
- une chambre de transfert **(R)** distincte de la chambre de combustion **(C),** dans laquelle sont stockés les gaz de combustion avant leur évacuation vers l'extérieur via la chambre de tranquillisation **(T),** un conduit (5) reliant la chambre de combustion **(C)** à la chambre de transfert **(R),**
et **en ce que** ce conduit (5) comprend un tronçon fixe (50) et un tronçon mobile (51) par rapport au tronçon fixe, ces tronçons (50, 51) étant susceptibles d'occuper une première position extrême dans laquelle ledit conduit (5) isole complètement ladite chambre de tranquillisation **(T)** des chambres de combustion **(C)** et de transfert **(R),** et une seconde position extrême dans laquelle ledit conduit (5), par déplacement du tronçon mobile, ouvre un passage **(P)** pour les gaz de ladite chambre de transfert **(R)** vers ladite chambre de tranquillisation **(T),** la transition d'une position à l'autre s'opérant dès qu'une consigne de pression dans la chambre de transfert **(R)** est atteinte.

2. Générateur selon la revendication 1, **caractérisé par le fait que** ladite chambre de tranquillisation **(T)** est intercalée entre les chambres de combustion **(C)** et de transfert **(R).**

3. Générateur selon la revendication 2, **caractérisé par le fait que** ledit conduit (5) s'étend dans la chambre de tranquillisation **(T).**

4. Générateur selon l'une des revendications 2 ou 3, **caractérisé par le fait que** les extrémités opposées dudit conduit (5) sont montées dans deux cloisons (12 ; 13) de séparation des trois chambres **(C ; T ; R).**

5. Générateur selon l'une des revendications 1 à 4, **caractérisé par le fait que** ledit tronçon mobile (51) est monté à l'intérieur du tronçon fixe (50).

6. Générateur selon la revendication 5, **caractérisé par le fait que** la surface de la section droite (52) dudit tronçon mobile (51), au niveau de son extrémité située côté chambre de transfert **(R),** est supérieure à la surface de la section droite **(S₁)** de ce même tronçon, au niveau de son extrémité opposée, située côté chambre de combustion **(C).**

7. Générateur selon l'une des revendications 4 à 6, **caractérisé par le fait que** ledit tronçon fixe (50) est solidaire de la cloison (12) de séparation des chambres de combustion **(C)** et de tranquillisation **(T),** et est, de préférence, d'une seule pièce avec elle.

8. Générateur selon l'une des revendications 4 à 7, **caractérisé par le fait qu'**au moins une partie terminale (53) dudit tronçon mobile (51) présente une forme généralement tronconique, cette partie étant, dans ladite première position extrême, appliquée contre une ouverture complémentaire (130) formée dans la cloison (13) de séparation des chambres de tranquillisation **(T)** et de transfert **(R),** tandis qu'elle est légèrement détachée de cette ouverture (130) dans la seconde position extrême, l'espace qui les sépare constituant ainsi ledit passage **(P)** pour les gaz.

9. Générateur selon l'une des revendications 4 à 7, **caractérisé par le fait que** les dits tronçons (50, 51) sont tous les deux percés d'au moins une lumière (500, 510) qui fait communiquer leur espace intérieur avec la chambre de tranquillisation **(T),** ces lumières se situant respectivement en regard d'une partie pleine de l'autre tronçon dans ladite première position extrême, et se superposant au moins partiellement dans ladite seconde position extrême pour constituer ledit passage **(P)** pour les gaz.

10. Générateur selon l'une des revendications précédentes, **caractérisé par le fait que** ladite chambre de combustion **(C)** est fermée par un opercule (121) qui cède au-delà d'une valeur de pression dans la chambre de combustion **(C),** permettant ainsi aux gaz de s'engouffrer dans la chambre de transfert **(R),** via ledit conduit (5).

11. Générateur selon l'une des revendications précédentes, **caractérisé par le fait que** ladite chambre de transfert **(R)** renferme au moins une charge pyrotechnique additionnelle.

12. Dispositif de sécurité pour véhicule automobile, tel qu'un déclencheur d'airbag ou un rétracteur de ceinture de sécurité, équipé d'un générateur selon l'une des revendications précédentes.
